# EUROPEAN PATENT APPLICATION

(11) **EP 4 606 622 A1**
(43) Date of publication of application: **27.08.2025**
(21) Application number: 25152262.9
(22) Date of filing: 16.01.2025
(51) Int. Cl.: B60L 15/20, B60W 50/08

(54) **BATTERY ELECTRIC VEHICLE**

(30) Priority: 21.02.2024 JP 2024024758
(71) Applicant: TOYOTA JIDOSHA KABUSHIKI KAISHA, Aichi-ken, 471-8571 (JP)
(72) Inventor: SATONAKA, Kenta, TOYOTA-SHI, AICHI-KEN, 471-8571 (JP); ISAMI, Yoichiro, TOYOTA-SHI, AICHI-KEN, 471-8571 (JP); IMAMURA, Tatsuya, TOYOTA-SHI, AICHI-KEN, 471-8571 (JP)
(74) Representative: Cabinet Beau de Loménie

(57) **Abstract**

A battery electric vehicle (100) includes a processor (102), a first controller (22), and a second controller (24). The battery electric vehicle (100) includes a first mode and a second mode. The processor (102) is configured to execute switching a relationship between an operation amount of the first controller (22) and torque of the electric motor (4F, 4R) from among a plurality of predetermined relationships in accordance with an operation of the second controller (24) in a case where the electric motor (4F, 4R) is controlled in the second mode, and selecting the relationship between the operation amount of the first controller (22) and the torque of the electric motor (4F, 4R) from among the predetermined relationships in accordance with a vehicle speed of the battery electric vehicle (100) in a case where the first mode is switched to the second mode.

## Description

### BACKGROUND OF THE INVENTION

### 1. Field of the Invention

The present disclosure relates to a battery electric vehicle including an electric motor as a drive source.

### 2. Description of Related Art

Japanese Patent No. 6787507 (JP 6787507 B) discloses a battery electric vehicle that can reproduce behavior of a vehicle (transmission vehicle) using an engine as a power source and including a manual transmission in a pseudo manner by control of an electric motor. The battery electric vehicle includes an EV traveling mode (EV mode) for performing general EV traveling and an MT traveling mode (MT mode) for reproducing behavior of a transmission vehicle. A driver can switch the MT mode and the EV mode by a switch or the like. In the MT mode, a gear position of a transmission vehicle is also virtually reproduced, and the driver can perform a gear shift operation by his or her own hand as in a case of driving the transmission vehicle.

### SUMMARY OF THE INVENTION

Consideration will be given to selection of a gear position when an EV mode is switched to an MT mode in a battery electric vehicle including the MT mode and the EV mode. The EV mode is a mode in which an operation of a shift device is disabled and the battery electric vehicle performs normal EV traveling. The MT mode is a mode in which the gear shift operation by the shift device is enabled. The gear shift operation is for switching a virtual gear position, and when the gear position is switched, a relationship between virtual engine torque reproduced by an operation amount of an accelerator pedal and torque of an electric motor is switched.

Here, in a case where the shift device has a structure in which the gear position is uniquely specified by a position of a stick or the like, a gear position reproduced at a time of switching to the MT mode is also uniquely determined according to the position of the stick. However, in a case where the shift device is a device that relatively specifies the gear position, that is, a device that instructs up or down with the current gear position as a reference, the gear position when the EV mode, in which the virtual gear position is not set, is switched to the MT mode cannot be uniquely determined.

The present disclosure relates to a battery electric vehicle including an electric motor as a drive source. The battery electric vehicle includes a processor configured to control the electric motor; a first controller configured to give a continuous instruction to the processor in accordance with an operation amount of the first controller; and a second controller configured to give a discrete instruction to the processor for each operation of the second controller. The processor is configured to execute the following processing. First processing is to determine torque of the electric motor in accordance with the operation amount of the first controller in a case where the electric motor is controlled in a first mode, the first mode being a mode in which the operation of the second controller is disabled. Second processing is to switch a relationship between the operation amount of the first controller and the torque of the electric motor from among a plurality of predetermined relationships in accordance with the operation of the second controller in a case where the electric motor is controlled in a second mode, the second mode being a mode in which the operation of the second controller is enabled. Third processing is to select the relationship between the operation amount of the first controller and the torque of the electric motor from among the predetermined relationships in accordance with a vehicle speed of the battery electric vehicle in a case where the first mode is switched to the second mode.

With the battery electric vehicle of the present disclosure, the relationship between the operation amount of the first controller and the torque of the electric motor is selected from among the predetermined relationships in accordance with a vehicle speed in a case where the first mode (EV mode) in which the operation of the second controller is disabled is switched to the second mode (MT mode) in which the operation of the second controller is enabled. The predetermined relationships correspond to a plurality of virtually set gear positions. That is, with the battery electric vehicle according to the present disclosure, at a time of switching the first mode to the second mode, the virtual gear position is automatically selected according to the vehicle speed. As a result, even in a case where the shift device is a device that relatively specifies the gear position and a driver cannot uniquely specify the gear position by the shift device, a gear position at a time of switching to the second mode can be set to an appropriate gear position matched to a traveling state.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram showing a configuration of a battery electric vehicle according to an embodiment of the present disclosure;
FIG. 2A is a diagram showing an example of a relative control type shift device;
FIG. 2B is a diagram showing an example of a relative control type shift device;
FIG. 3 is a diagram showing another example of the relative control type shift device;
FIG. 4A is a diagram showing still another example of the relative control type shift device;
FIG. 4B is a diagram showing still another example of the relative control type shift device;
FIG. 5A is a diagram showing still another example of the relative control type shift device;
FIG. 5B is a diagram showing still another example of the relative control type shift device;
FIG. 6 is a diagram showing a configuration of a control device relating to traveling control of the battery electric vehicle.
FIG. 7 is a graph showing a relationship between a vehicle speed and a virtual engine speed;
FIG. 8 is a time chart showing a state of selection of a gear position in a first embodiment.
FIG. 9 is a graph for describing selection of a gear position in a normal mode;
FIG. 10 is a graph for describing selection of a gear position in a snow mode;
FIG. 11 is a time chart showing a state of selection of a gear position in a third embodiment; and
FIG. 12 is a flowchart showing an example of processing relating to selection of a gear position according to the embodiment of the present disclosure.

### DETAILED DESCRIPTION OF EMBODIMENTS

Embodiments of the present disclosure will be described with reference to the accompanying drawings.

### 1. Configuration of Power System of Battery Electric Vehicle

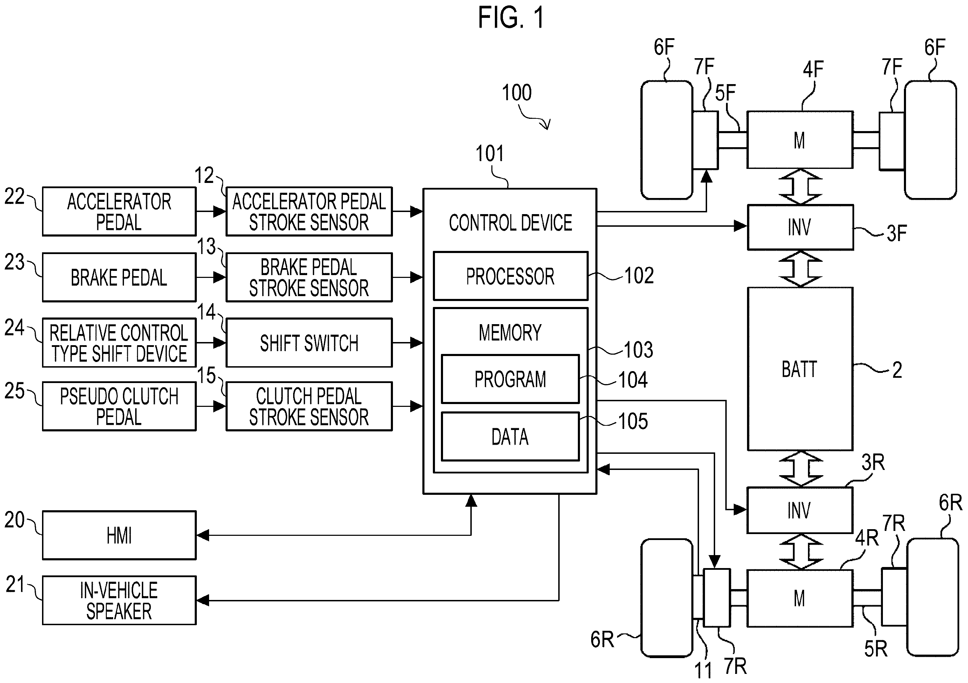

FIG. 1 is a diagram schematically showing a configuration of a battery electric vehicle 100 according to an embodiment of the present disclosure. First, a configuration of a power system of the battery electric vehicle 100 will be described with reference to FIG. 1.

The battery electric vehicle 100 includes two electric motors (M) 4F, 4R as power sources for traveling at the front and rear. The electric motors 4F, 4R are, for example, three-phase alternating current motors. The front electric motor 4F is connected to a front drive shaft 5F that drives front wheels 6F. The rear electric motor 4R is connected to a rear drive shaft 5R that drives rear wheels 6R. The front wheels 6F are suspended from right and left independent electronic controlled front suspensions 7F. The rear wheels 6R are suspended from right and left independent electronic controlled rear suspensions 7R.

Inverters (INV) 3F, 3R are attached to the front electric motor 4F and the rear electric motor 4R, respectively. The front inverter 3F and the rear inverter 3R are connected to a battery (BATT) 2. The battery 2 stores electric energy for driving the electric motors 4F, 4R. That is, the battery electric vehicle 100 is a battery electric vehicle (BEV) that travels by electric energy stored in the battery 2. The inverters 3F, 3R are, for example, voltage inverters, and control the torque of the electric motors 4F, 4R by PWM control. The configuration shown in FIG. 1 is an example, and the battery electric vehicle 100 may be a front-wheel drive vehicle including one electric motor at the front or may be a rear-wheel drive vehicle including one electric motor at the rear.

### 2. Configuration of Control System of Battery Electric Vehicle

The configuration of a control system of the battery electric vehicle 100 will be described with reference to FIGS. 1 to 5B.

The battery electric vehicle 100 includes a vehicle speed sensor 11. At least one of wheel speed sensors (not shown) provided in the right and left front wheels 6F and the right and left rear wheels 6R is used as the vehicle speed sensor 11. the battery electric vehicle 100 includes an accelerator pedal stroke sensor 12. The accelerator pedal stroke sensor 12 is provided in an accelerator pedal 22 and outputs a signal indicating a pressing amount of the accelerator pedal 22, that is, an accelerator operation amount. The operation of the accelerator pedal 22 by the driver is a continuous operation, and during traveling of the battery electric vehicle 100, a signal indicating the accelerator operation amount is continuously transmitted to a control device 101. Although the accelerator pedal 22 is a pedal-type device operated by foot, a device for operating an accelerator may be a device operated by a hand. For example, the battery electric vehicle 100 may include a lever-type accelerator operation device or a dial-type accelerator operation device that is operated by hand instead of the accelerator pedal 22. The accelerator pedal 22 is an example of a first controller.

Further, the battery electric vehicle 100 includes a brake pedal stroke sensor 13. The brake pedal stroke sensor 13 is provided in a brake pedal 23 and outputs a signal indicating a pressing amount of the brake pedal 23, that is, a brake operation amount. The operation of the brake pedal 23 by the driver is a continuous operation, and during traveling of the battery electric vehicle 100, a signal indicating the brake operation amount is continuously transmitted to the control device 101.

The accelerator pedal 22 and the brake pedal 23 are driving operation members used for driving the battery electric vehicle 100. In addition to the driving operation members, the battery electric vehicle 100 includes a gear shift operation member for performing a virtual gear shift operation that simulates a gear shift operation of a transmission vehicle. The gear shift operation member includes a relative control type shift device 24 and a pseudo clutch pedal 25 described below.

The relative control type shift device 24 is a device for the driver to perform a gear shift operation. In the relative control type shift device 24, a gear position (gear stage) can be sequentially increased or decreased by one stage. For example, in the relative control type shift device 24, the gear position can be switched to first gear, second gear, third gear, and the like in order. The driver sequentially switches the gear position to select a desired gear position. In other words, the relative control type shift device 24 is a device that relatively specifies the gear position. However, since the battery electric vehicle 100 does not include a physical transmission, the gear position specified by the relative control type shift device 24 is a virtual gear position. The relative control type shift device 24 is an example of a second controller.

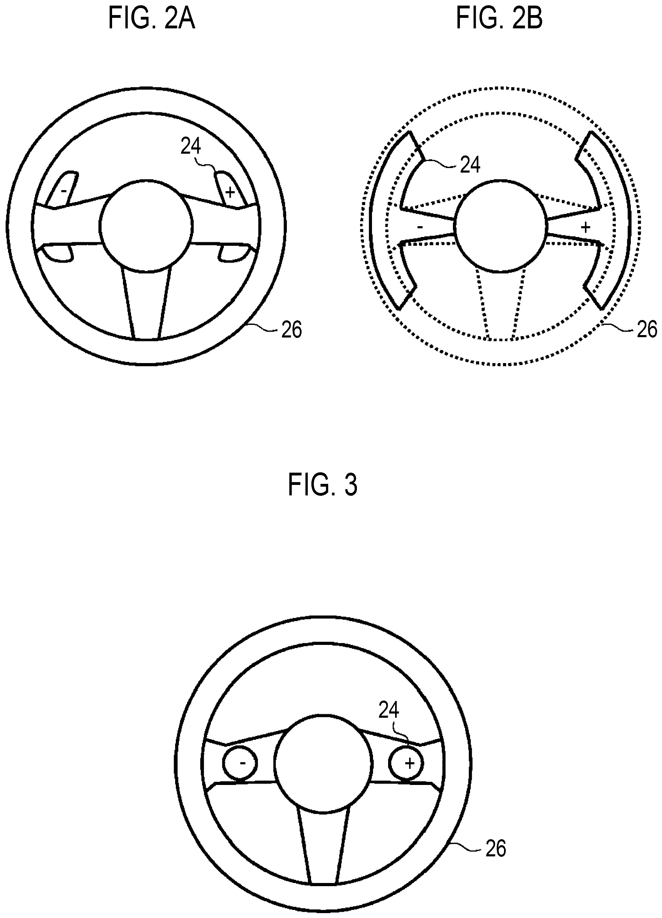

The relative control type shift device 24 need only be a device with which the driver can relatively specify the gear position, and is not particularly limited in structure. Specific examples of the relative control type shift device 24 are shown in FIGS. 2A to 5B.

FIGS. 2A and 2B show, as an example of the relative control type shift device 24, a pseudo paddle shifter 24 that simulates a paddle shifter, which is a type of a sequential shifter. The pseudo paddle shifter 24 is a dummy different from a genuine paddle shifter. The pseudo paddle shifter 24 has a structure similar to a shift paddle attached to a steering wheel 26, and can independently move right and left paddles. The pseudo paddle shifter 24 may be attached to a steering wheel or may be attached to a steering column. FIG. 2A shows a pseudo paddle shifter that simulates a paddle shifter attached to a steering wheel, and FIG. 2B shows a pseudo paddle shifter that simulates a paddle shifter attached to a steering column. A shift switch 14 is provided in the pseudo paddle shifter 24. The shift switch 14 outputs an upshift signal when a right paddle is pulled, and outputs a downshift signal when a left paddle is pulled.

FIG. 3 shows a button-type device provided on the steering wheel 26 as another example of the relative control type shift device 24. The shift switch 14 is provided in the button-type relative control type shift device 24. The shift switch 14 outputs an upshift signal when a right button is pressed, and outputs a downshift signal when a left button is pressed. The button-type relative control type shift device 24 may be attached to a place other than the steering wheel. For example, a button provided on a center console may be used as the relative control type shift device 24.

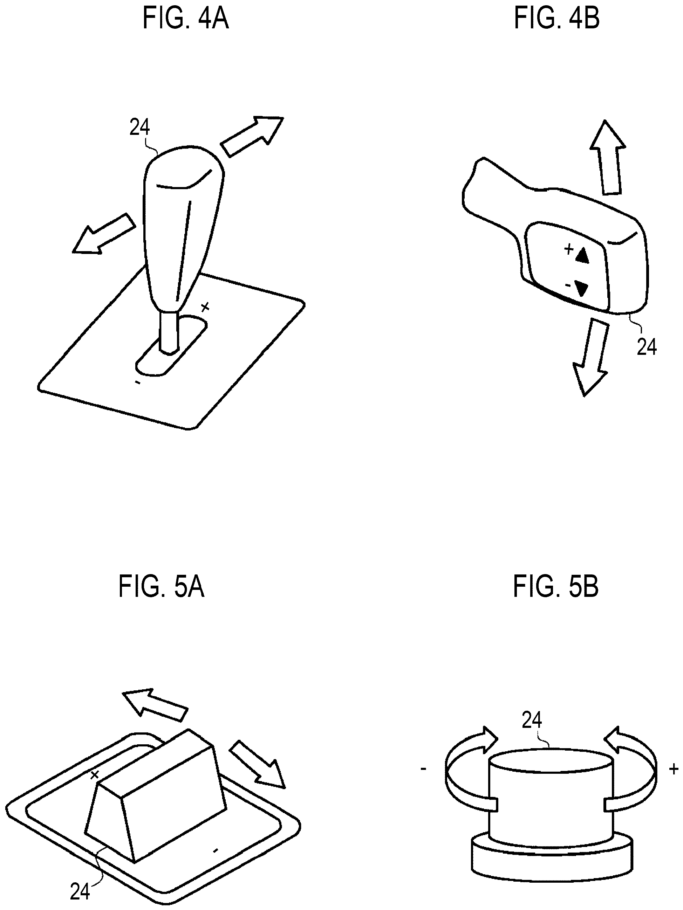

FIGS. 4A and 4B show still another example of the relative control type shift device 24, that is, a pseudo shift lever 24 that simulates a shift lever, which is a type of a sequential shifter. The pseudo shift lever 24 is a dummy different from a genuine shift lever. FIG. 4A is an example of the pseudo shift lever 24 provided in the center console, and FIG. 4B is an example of the pseudo shift lever 24 provided in the steering column. The shift switch 14 is provided in the pseudo shift lever 24. The shift switch 14 outputs an upshift signal when the shift lever is moved to a rear side or an upper side, and outputs a downshift signal when the shift lever is moved to a front side or a lower side. The pseudo shift lever 24 may be provided at a place other than the center console and the steering column.

FIGS. 5A and 5B shows still another example of the relative control type shift device 24. For example, the relative control type shift device 24 may be a toggle switch as in FIG. 5A. When the driver tilts the knob backward, the switch outputs an upshift signal, and when the driver tilts the knob forward, the switch outputs a downshift signal. Alternatively, the relative control type shift device 24 may be a rotary switch as in FIG. 5B. When the driver turns the knob to the right, the switch outputs an upshift signal, and when the driver turns the knob to the left, the switch outputs a downshift signal. The switches may be provided at any place inside the battery electric vehicle 100 as long as the driver can operate the switches from the driver's seat.

As still another example, the relative control type shift device 24 may be a touch panel type. That is, a screen for selecting the upshift or the downshift may be displayed on the touch panel.

The operation performed by the driver on the relative control type shift device 24 as described above is a discrete operation, and a signal indicating upshift or downshift is discretely output from the relative control type shift device 24 (shift switch 14) each time the driver performs the operation.

FIG. 1 is referred to again. The pseudo clutch pedal 25 is a dummy different from a genuine clutch pedal. The pseudo clutch pedal 25 has a structure similar to a clutch pedal provided in a transmission vehicle in the related art. For example, the pseudo clutch pedal 25 includes a reaction force mechanism that generates a reaction force in response to pressing by the driver. A position when a pressing force is not applied is an initial end position of the pseudo clutch pedal 25, and a position when the pseudo clutch pedal 25 is pressed all the way down is a terminal end position of the pseudo clutch pedal 25. The driver can operate the pseudo clutch pedal 25 against the reaction force from the reaction force mechanism from the initial end position to the terminal end position. A clutch pedal stroke sensor 15 is provided in the pseudo clutch pedal 25. The clutch pedal stroke sensor 15 outputs a signal indicating a pressing amount of the pseudo clutch pedal 25. Since the battery electric vehicle 100 does not have a physical clutch, an operation amount of the pseudo clutch pedal 25, that is, a clutch operation amount is a virtual clutch operation amount.

Although the pseudo clutch pedal 25 is a pedal-type operation device operated by foot, a lever-type operation device or a dial-type operation device that is operated by hand may be provided as a pseudo clutch operation device. The pseudo clutch operation device can be operated by the driver from the initial end position to the terminal end position against the reaction force, and various structures can be adopted as long as the driver can feel operation feeling as in a clutch pedal provided in a transmission vehicle in the related art with a foot or a hand.

The battery electric vehicle 100 includes a human machine interface (HMI) 20 and an in-vehicle speaker 21 as an interface with a driver. The HMI 20 includes a touch panel display. The HMI 20 displays information on the touch panel display and receives input from the driver by a touch operation on the touch panel display. The information displayed on the touch panel display of the HMI 20 includes a virtual rotation speed of a virtual engine (hereinafter, referred to as a virtual engine speed) described later. The in-vehicle speaker 21 provides the driver with information by voice and can output a pseudo engine sound described later.

The battery electric vehicle 100 includes the control device 101. A sensor or a control target device mounted on the battery electric vehicle 100 is connected to the control device 101 via an in-vehicle network. Various sensors are mounted on the battery electric vehicle 100 in addition to the vehicle speed sensor 11, the accelerator pedal stroke sensor 12, the brake pedal stroke sensor 13, the shift switch 14, and the clutch pedal stroke sensor 15. For example, the battery electric vehicle 100 may be equipped with a recognition sensor, such as a camera, that recognizes surroundings of the vehicle.

The control device 101 is typically an electronic control unit (ECU). The control device 101 may be a combination of a plurality of ECUs. The control device 101 includes at least a processor 102 and a memory 103. The memory 103 includes a RAM that temporarily records data and a ROM that stores a program 104 that can be executed by the processor 102 and various kinds of data 105 relating to the program. The program 104 is configured of a plurality of instructions. The processor 102 reads out and executes the program 104 and the data 105 from the memory 103, and produces a control signal based on signals acquired from the respective sensors. The number of processors 102 included in the control device 101 may be one or a plurality.

The control device 101 can control the battery electric vehicle 100 in various control modes. The control mode can be selected by the driver himself/herself by the driver performing a touch operation on the touch panel display of the HMI 20. Specifically, the touch operation is performed on the touch panel display of the HMI 20, whereby one or a plurality of programs 104 associated with each touch operation is read out from the memory 103 and the programs are executed by the processor 102. Hereinafter, the control mode of the battery electric vehicle 100 by the control device 101, which is selectable by the driver through the operation of the HMI 20 will be described.

### 3. Control Mode of Battery Electric Vehicle

The control mode of the battery electric vehicle 100 that is selectable by the control device 101 includes at least an EV mode and an MT mode. The driver can select the control mode from a selection screen displayed on a touch panel display of the HMI 20.

When the EV mode is selected, the control mode of the battery electric vehicle 100 is switched to the EV mode. The EV mode is a mode in which the vehicle travels by controlling the electric motor with normal torque characteristics. In the EV mode, the gear shift operation of the relative control type shift device 24 and a clutch operation of the pseudo clutch pedal 25 are disabled. In the EV mode, the driver can basically drive the battery electric vehicle 100 by solely operating the accelerator pedal 22, the brake pedal 23, and the steering wheel. Alternatively, in the EV mode, a mode in which the operation of the pseudo clutch pedal 25 is enabled may be selectable by the driver. In this case, at least the operation of the relative control type shift device 24 is disabled.

When the MT mode is selected, the control mode of the battery electric vehicle 100 is switched to the MT mode. The MT mode is a control mode for causing the battery electric vehicle 100 to operate like a transmission vehicle. In the MT mode, the operation of the relative control type shift device 24 is enabled, and an operation when a manual transmission gear ratio is switched is reproduced by the gear shift operation of the relative control type shift device 24.

In the MT mode, a further detailed control mode may be selectable by the driver. For example, as a shift mode, a shift mode with the clutch operation or a shift mode without the clutch operation may be selectable. In the shift mode with the clutch operation, in addition to the gear shift operation by the relative control type shift device 24, the driver needs to perform the clutch operation of the pseudo clutch pedal 25. On the other hand, in the shift mode without the clutch operation, the clutch operation is automatically performed by the robot. When the shift mode is switched to the shift mode without the clutch operation, the clutch operation of the pseudo clutch pedal 25 is disabled.

In addition, options relating to an engine characteristic, an engine sound, a drive mode, a suspension characteristic, the number of gear positions, and the like may be further selectable by the driver. By appropriately combining the options, the driver can determine characteristics of a transmission vehicle desired to be simulated by the battery electric vehicle 100. As described above, the control mode of the battery electric vehicle 100 can be switched to the driver's preference by operating the touch panel display of the HMI 20.

The battery electric vehicle 100 may include a mode switching switch for switching between the EV mode and the MT mode, and the driver may be able to switch between the EV mode and the MT mode by pressing the mode switching switch instead of operating the displayed screen of the touch panel display.

Such a control mode switched by the driver relates to traveling control of the battery electric vehicle 100. In the following chapter, the traveling control of the battery electric vehicle 100 by the control device 101 will be described.

### 4. Traveling Control of Battery Electric Vehicle

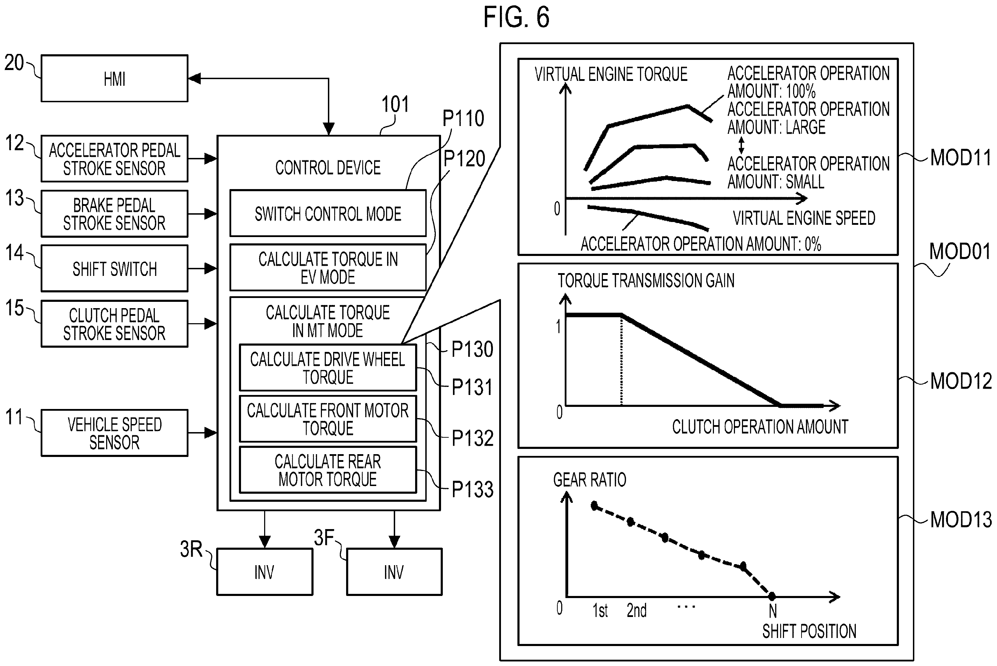

FIG. 6 is a diagram showing a configuration of the control device 101 relating to the traveling control of the battery electric vehicle 100. Specifically, FIG. 6 shows a configuration particularly relating to torque control in the traveling control. The processor 102 functions as a traveling control device by the processor 102 executing the one or more programs 104 for the traveling control, which is stored in the memory 103.

A control mode signal from the HMI 20 is input to the control device 101 as the traveling control device. The control mode signal includes information on the control mode selected by the driver. The control device 101 executes processing P110 based on the control mode signal. In the processing P110, the control mode is switched in accordance with the control mode signal. Switching of the control mode that affects the traveling control in particular is the switching between the EV mode and the MT mode.

When the control mode is switched to the EV mode, the control device 101 executes processing P120 for calculating the torque in the EV mode. In the processing P120, the control device 101 acquires the vehicle speed from a signal of the vehicle speed sensor 11 and acquires the accelerator operation amount from the signal of the accelerator pedal stroke sensor 12. The control device 101 has a motor torque map in which the accelerator operation amount and the vehicle speed are parameters. The control device 101 inputs the vehicle speed and the accelerator operation amount to the motor torque map, and controls the inverters 3F, 3R such that the torque obtained from the motor torque map is generated in the electric motors 4F, 4R.

When the control mode is switched to the MT mode, the control device 101 executes processing P130 for calculating the torque in the MT mode. The processing P130 includes processing P131 for calculating torque generated by drive wheels. The processing P130 includes processing P132 and processing P133. The processing P132 is processing for calculating the torque to be generated in the front electric motor 4F, and the processing P133 is processing for calculating the torque to be generated in the rear electric motor 4R. The processing P132 and the processing P133 are executed in accordance with the drive wheel torque calculated in the processing P131 and torque distribution between the front wheels 6F and the rear wheels 6R.

A vehicle model MOD01 is used to calculate the drive wheel torque in the processing P131. The vehicle model MOD01 includes an engine model MOD11, a clutch model MOD12, and a transmission model MOD13. An engine that is virtually realized by the vehicle model MOD01 is referred to as a virtual engine, a clutch that is virtually realized is referred to as a virtual clutch, and a transmission that is virtually realized is referred to as a virtual transmission. In the engine model MOD11, the virtual engine is modeled. In the clutch model MOD12, the virtual clutch is modeled. In the transmission model MOD13, the virtual transmission is modeled.

The engine model MOD11 calculates the virtual engine speed and a virtual engine torque. The virtual engine speed is calculated from the vehicle speed, a total reduction ratio, and a slip ratio of a virtual clutch. The virtual engine torque is calculated from the virtual engine speed and the accelerator operation amount. The vehicle speed is acquired from the signal of the vehicle speed sensor 11. The accelerator operation amount is acquired from the signal of the accelerator pedal stroke sensor 12. The total reduction ratio is a numerical value obtained by multiplying a gear ratio of the virtual transmission by a reduction ratio determined by a mechanical structure from the virtual transmission to the drive wheels. In the engine model MOD11, a relationship between the virtual engine speed and the virtual engine torque is defined for each accelerator operation amount. An engine characteristic of the engine model MOD 11 may be selectable by the driver through the operation of the HMI 20.

The clutch model MOD12 calculates a torque transmission gain. The torque transmission gain is a gain for calculating a degree of torque transmission of the virtual clutch corresponding to the clutch operation amount. When the shift mode with the clutch operation is selected as the shift mode, the clutch operation amount is acquired from the signal of the clutch pedal stroke sensor 15. The clutch operation amount is 0% at the initial end position of the pseudo clutch pedal 25, and 100% at the terminal end position of the pseudo clutch pedal 25. In the clutch model MOD12, a torque transmission gain is given with respect to the clutch operation amount. The torque transmission gain is converted into a clutch torque capacity of the virtual clutch, that is, a virtual clutch torque capacity. Then, virtual clutch torque to be input to the virtual transmission from the virtual clutch is calculated based on comparison between the virtual clutch torque capacity and the virtual engine torque calculated by the engine model MOD 11. In the clutch model MOD 12, a value obtained by subtracting the torque transmission gain from one is calculated as the slip ratio. The slip ratio is used for calculating the virtual engine speed in the engine model MOD 11.

When the shift mode without the clutch operation is selected as the shift mode, the clutch operation amount to be input to the clutch model MOD12 is calculated by using a clutch operation model. The clutch operation model is a model that simulates a clutch operation of a model driver. The vehicle speed, the virtual engine speed, and the signal from the shift switch 14 (relative control type shift device 24) are input to the clutch operation model.

The signal from the shift switch 14 is used for measuring a timing of the clutch operation. When the gear shift operation of the driver is detected by the signal from the shift switch 14, the clutch operation amount is maximized in the clutch operation model so that the virtual clutch is disengaged. The vehicle speed and the virtual engine speed are used for calculating the clutch operation amount. In the clutch operation model, the clutch operation amount is calculated based on a rotation speed difference between a rotation speed of an input shaft of the virtual transmission and the virtual engine speed, such that the rotation speed of the input shaft of the virtual transmission calculated from the vehicle speed and the virtual engine speed are smoothly matched.

The transmission model MOD13 calculates a virtual gear ratio. The virtual gear ratio is a gear ratio determined by a virtual gear position in the virtual transmission. The virtual gear ratio is set for each gear position. The maximum virtual gear ratio is set to the first gear, and the virtual gear ratio is reduced in an order of the second gear, the third gear, the fourth gear, and the like. The gear position is increased by one stage in response to the upshift signal of the shift switch 14, and the gear position is decreased by one stage in response to the downshift signal of the shift switch 14. There is no physical restriction on the number of the gear positions indicated by the relative control type shift device 24. Therefore, the number of the gear positions may be variable, and different transmission models MOD 13 may be used according to the number of the gear positions.

The transmission model MOD13 calculates the virtual transmission torque by using the virtual gear ratio and the virtual clutch torque. The virtual transmission torque is virtual torque output from the virtual transmission. The control device 101 controls the inverters 3F, 3R such that the output torque of the electric motors 4F, 4R is changed according to the virtual transmission torque. The virtual transmission torque is discontinuously changed in response to the switching of the virtual gear ratio. The change in the discontinuous virtual transmission torque generates a torque shock in the battery electric vehicle 100, and a vehicle having a stepped transmission is simulated.

The vehicle model MOD01 calculates the drive wheel torque from the virtual transmission torque and the reduction ratio. The drive wheel torque is a total of torque acting on the right and left front wheels 6F and the right and left rear wheels 6R. The torque distribution to the front wheels 6F and the rear wheels 6R can be fixed or can be actively or passively changed. For example, a four-wheel drive mode for driving four wheels or a rear-wheel drive mode for driving only rear wheels may be selectable by the driver.

The vehicle model MOD01 is predetermined. The relationship between the drive wheel torque calculated based on the vehicle model MOD01 and the accelerator operation amount changes when the virtual gear position is switched. In other words, when any gear position is selected, the relationship between the accelerator operation amount and the torque output from the electric motors 4F, 4R is set to a relationship corresponding to the selected gear position among a plurality of predetermined relationships by the vehicle model MOD01.

In the processing P132, the torque of the front electric motor 4F (front motor torque) in the MT mode is calculated by multiplying the drive wheel torque calculated in the processing P131 by a torque distribution ratio to the front wheels 6F and a reduction ratio from an output shaft of the front electric motor 4F to the front wheels 6F. The control device 101 controls the front inverter 3F to cause the front electric motor 4F to generate the front motor torque calculated in the processing P132.

In the processing P133, the torque of the rear electric motor 4R (rear motor torque) in the MT mode is calculated by multiplying the drive wheel torque calculated in the processing P131 by a torque distribution ratio to the rear wheels 6R and a reduction ratio from an output shaft of the rear electric motor 4R to the rear wheels 6R. The control device 101 controls the rear inverter 3R to cause the rear electric motor 4R to generate the rear motor torque calculated in the processing P133.

In a case where the battery electric vehicle 100 is a front-wheel drive vehicle, the drive wheel torque calculated in the processing P131 is a total of torque applied to the right and left front wheels 6F. Alternatively, in a case where the battery electric vehicle 100 is a rear-wheel drive vehicle, the drive wheel torque calculated in the processing P131 is a total of torque applied to the right and left rear wheels 6R.

### 5. Sound Control of Battery Electric Vehicle

The control device 101 may also execute sound control for controlling a sound emitted from the in-vehicle speaker 21. By the processor 102 executing the one or more programs 104 for the sound control stored in the memory 103, the processor 102 functions as a sound control device. The processor 102 that functions as the torque control device and the processor 102 that functions as the sound control device may be separate processors or the same processor.

The control device 101 as the sound control device can generate artificially produced sounds from the in-vehicle speaker 21. One of the artificial sounds is a pseudo engine sound imitating an engine sound in an internal combustion engine vehicle in the related art. In a case where the control mode signal indicating that the MT mode is selected is input from the HMI 20, the control device 101 as the sound control device produces the pseudo engine sound based on the virtual engine torque calculated in the processing P131 and the virtual engine speed.

In a case where the engine sound is selectable by the driver, the engine sound selected in the HMI 20 is used as a sound source of the pseudo engine sound generated from the in-vehicle speaker 21. Note that the sound of the sound source is not used as it is, a sound pressure of the engine sound is calculated such that the sound pressure is increased as the virtual engine torque is increased, and a frequency of the engine sound is calculated such that the frequency is increased as the virtual engine speed is increased. For example, the sound pressure of the sound source is changed by an amplifier, a frequency of the sound source is changed by a frequency modulator, and the pseudo engine sound is reproduced from the in-vehicle speaker 21. The virtual engine torque and the virtual engine speed change according to the accelerator operation, the gear shift operation, and the clutch operation of the driver. In this way, by changing the sound pressure and the frequency of the pseudo engine sound according to the virtual engine torque and the virtual engine speed that change according to the operation of the driver, it is possible to provide the driver with a sense of reality that the driver is driving a real transmission vehicle.

### 6. Selection of Gear Position at Time of Switching of Control Mode

As described above, the driver of the battery electric vehicle 100 can select the EV mode or the MT mode as the control mode. In the MT mode, the driver can drive the battery electric vehicle 100 while the gear shift operation is performed, as in a case of driving a transmission vehicle. Here, the setting of the gear position when the control mode is switched from the EV mode to the MT mode will be considered.

As described above, the battery electric vehicle 100 does not include a physical transmission, and the gear position set in the MT mode is merely a virtual gear position. Therefore, the operation of the relative control type shift device 24 is disabled in the EV mode, and the gear position is not set. Therefore, when the control mode is switched to the MT mode, the virtual gear position needs to be newly set.

In a case where the shift device that the driver uses to specify the virtual gear position uniquely specifies the gear position, the virtual gear position may be set to the gear position indicated by the shift device, and the setting of the gear position at the time of switching is not a problem. For example, in a case where the shift device is a device that simulates an H-shaped shifter and a physical position of a stick corresponds to each gear position, the virtual gear position is uniquely determined to the gear position corresponding to the position of the stick even at the time of switching to the MT mode.

However, the relative control type shift device 24 is a device for relatively specifying the gear position with a current gear position as a reference. Therefore, the gear position cannot be specified by using the relative control type shift device 24 from a state in which the virtual gear position is not set. Therefore, at the time of switching to the MT mode, the virtual gear position needs to be set regardless of an instruction of the driver.

As a method of setting the virtual gear position at the time of switching, a method of always setting the same gear position is also conceivable. For example, a method of always setting the gear position to the first gear position at the time of switching to the MT mode is also conceivable. However, in this case, when the vehicle speed of the battery electric vehicle 100 is high, the virtual engine speed is too high, and traveling performance is not comfortable for the driver. Similarly, in a case where a gear position other than first gear is set, the virtual engine output may fall outside an appropriate range.

Therefore, the control device 101 selects the virtual gear position according to the vehicle speed of the battery electric vehicle 100 at the time of switching from the EV mode to the MT mode. Hereinafter, the selection of the virtual gear position by the control device 101 will be described in three embodiments.

### 7. First Embodiment

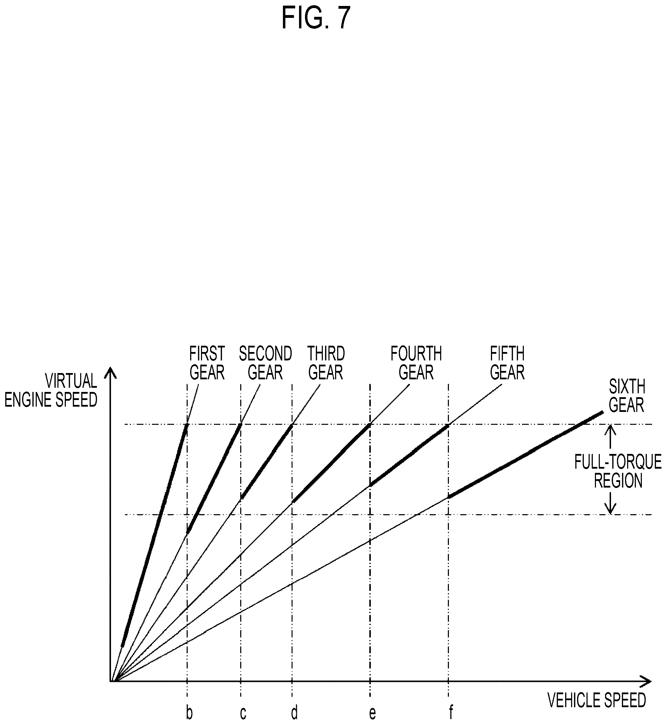

In a first embodiment, the gear position in which the virtual engine torque is maximized is selected according to the vehicle speed. FIG. 7 shows a relationship between the vehicle speed and the virtual engine speed for each of the virtual gear positions from the first gear to the sixth gear. As described above, the relationship between the vehicle speed and the virtual engine speed is predetermined by the vehicle model MOD01 such that the relationship is constant for each of the virtual gear positions. Note that FIG. 7 is an example, and the number of stages of the virtual gear position may be more than six stages or may be less than six stages.

The relationship between the virtual engine speed and the virtual engine torque is also predetermined by the vehicle model MOD01, and the electric motors 4F, 4R are controlled based on a result calculated using the vehicle model MOD01. Therefore, the gear position in which the virtual engine torque is maximized at a certain vehicle speed can be calculated based on the vehicle model MOD01. In the first embodiment, the virtual gear position calculated as described above is selected.

The selected virtual gear position is a gear position in which a relationship between the vehicle speed and the virtual engine speed is within a range of a bold line. That is, the first gear is selected in a case where the vehicle speed at the time of switching the control mode from the EV mode to the MT mode is equal to or less than b, the second gear is selected in a case where the vehicle speed is between b and c, the third gear is selected in a case where the vehicle speed is between c and d, the fourth gear is selected in a case where the vehicle speed is between d and e, the fifth gear is selected in a case where the vehicle speed is between e and f, and the sixth gear is selected in a case where the vehicle speed is equal to or greater than f.

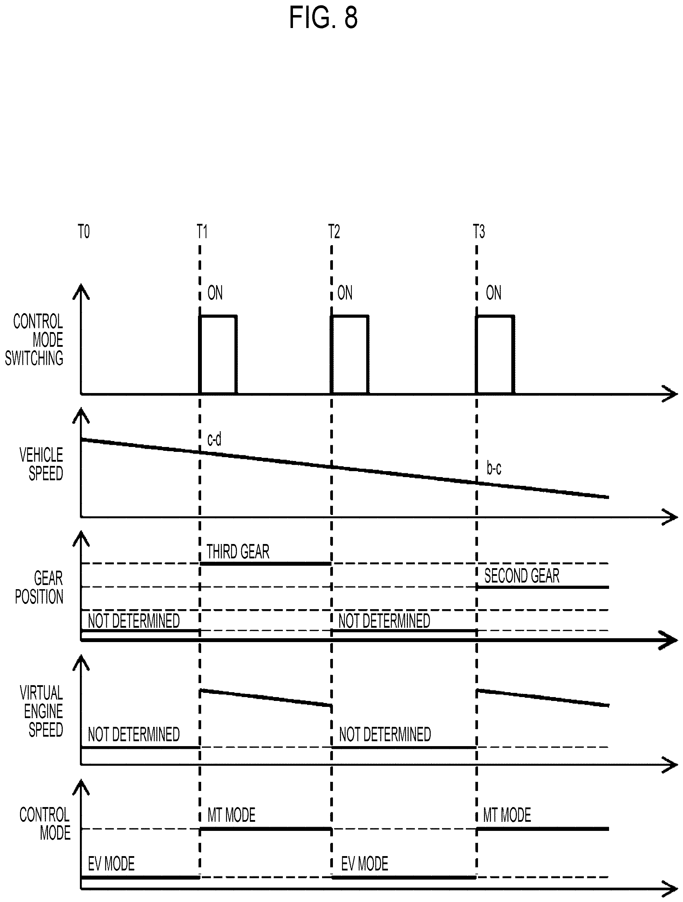

FIG. 8 shows a state of the selection of the virtual gear position as described above, in a time chart. At time T0, the EV mode is selected. At this point in time, the virtual gear position and the virtual engine speed are not determined.

At time T1, the driver operates the HMI 20 or presses the control mode switching switch to instruct the switching of the control mode, and the control mode is switched from the EV mode to the MT mode. At this time, the control device 101 selects the virtual gear position according to the vehicle speed. At time T1, the vehicle speed is between c and d. Therefore, the control device 101 selects the third gear that is the virtual gear position in which the virtual engine torque is maximized when the vehicle speed is between c and d. The virtual engine speed is calculated based on the vehicle speed, the selected virtual gear position, and the clutch operation amount.

Thereafter, the control mode is switched to the EV mode at time T2. Then, at time T3, the control mode is switched to the MT mode again. The vehicle speed at this time is between b and c. Therefore, the control device 101 selects the second gear that is the virtual gear position in which the virtual engine torque is maximized when the vehicle speed is between b and c. The virtual engine speed at this time is calculated based on the vehicle speed, the selected virtual gear position, and the clutch operation amount.

In this way, at the time of switching to the MT mode, the gear position in which the virtual engine torque is maximized is selected. In this way, acceleration performance at the time of switching to the MT mode can be sufficiently secured. Further, by selecting the gear position in this way, it is possible to reduce the likelihood of the virtual engine speed at the time of switching being too high or too low. These lead to improvement in drivability.

### 8. Second Embodiment

Next, a second embodiment will be described. In the second embodiment, a plurality of drive modes is present in the MT mode, and the virtual gear position selected at the time of switching the control mode is different depending on the drive mode. The plurality of the drive modes is one example of a plurality of modes.

Here, a case where there are three drive modes of a sport mode, a normal mode, and a snow mode will be described as an example. Note that the three drive modes are examples, and the number of drive modes and a method of selecting the virtual gear position in each mode are not limited.

Among the three drive modes, the sport mode is a mode for a driver who wants to travel with a quick acceleration. In a case where the sport mode is selected, the virtual gear position in which the virtual engine torque is maximized is selected according to the vehicle speed. The selected gear position is the same as that of the first embodiment, and the gear position in which the relationship between the vehicle speed and the virtual engine speed is within the range of the bold line in the graph of FIG. 7 is selected. Since the gear position in which the virtual engine torque is maximized is selected, it is possible to obtain satisfactory traveling performance for a driver who wants to quickly accelerate.

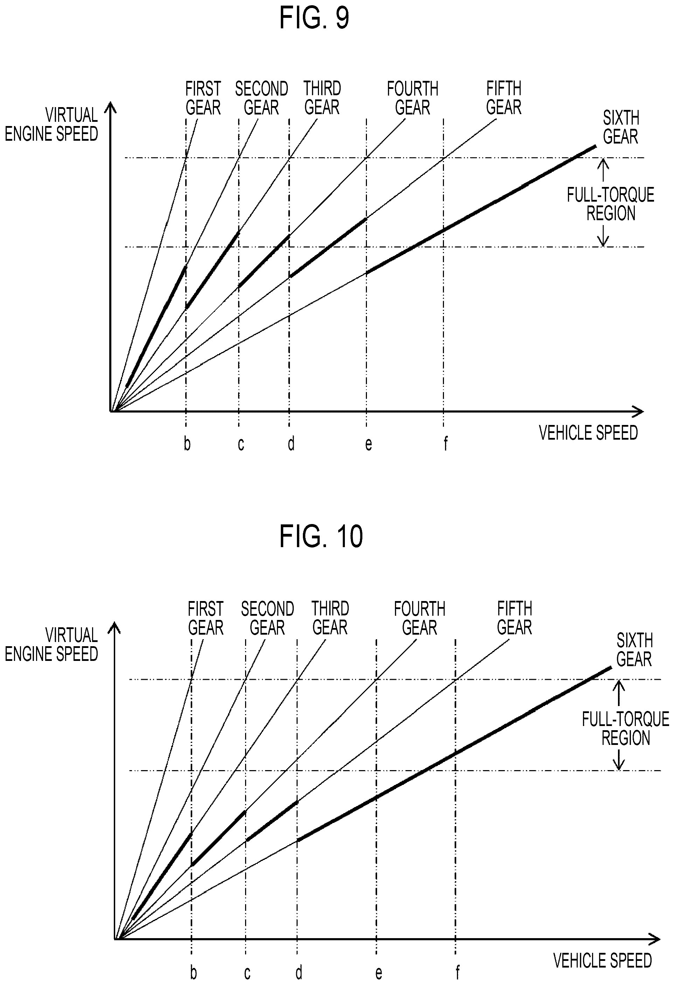

On the other hand, the normal mode is a mode for a driver who wants to obtain a stable traveling feeling while sudden acceleration is reduced. In the normal mode, a gear position that is one stage higher than the virtual gear position selected in the sport mode is selected. FIG. 9 is a graph showing a virtual gear position selected at the time of switching to the MT mode in the normal mode. In the graph, a gear position in which the relationship between the vehicle speed and the virtual engine speed is within a range of a bold line is selected. In a case where the higher gear position is not present, the same gear position as the gear position in the sport mode is selected. In the graph of FIG. 9, even in the normal mode, the sixth gear is selected even in a case where the vehicle speed is equal to or higher than f.

As a result of the selection of the gear position as described above, the virtual engine torque at the time of switching to the MT mode is torque that is slightly smaller than that in the maximum region. In this way, it is possible to suppress the vehicle from being suddenly accelerated. In addition, by selecting the gear position determined according to the vehicle speed, it is also possible to reduce the likelihood of the virtual engine torque at the time of switching being too small and the virtual engine speed from being too large.

In addition, the snow mode is a mode suitable for a slippery road surface, such as a snowy road. In the snow mode, the gear position that is one stage further higher than the virtual gear position selected in the normal mode is selected. FIG. 10 is a graph showing a virtual gear position selected at the time of switching to the MT mode in the snow mode. In the graph, a gear position in which the relationship between the vehicle speed and the virtual engine speed is within a range of a bold line is selected. In a case where the higher gear position is not present, the same gear position as the gear position in the normal mode is selected. In the graph of FIG. 10, even in the snow mode, the sixth gear is selected even in a case where the vehicle speed is equal to or higher than e. As a result of the selection of the gear position as described above, the virtual engine torque at the time of switching to the MT mode is torque further smaller than the torque in the normal mode. In this way, an acceleration force of the vehicle can be kept small, control performance can be improved, and a risk of slipping on a snowy road or the like can be reduced. In addition, by selecting the gear position determined according to the vehicle speed, it is also possible to reduce the likelihood of the virtual engine torque being too small and the virtual engine speed from being too large.

As described above, in the second embodiment, the drive modes are selectable, and the gear position to be selected according to the vehicle speed is set to be different depending on the drive mode. In this way, the gear position can be selected for each drive mode such that the virtual engine torque according to the situation is provided. In any drive mode, the selected gear position is determined according to the vehicle speed, and thus the virtual engine speed or the virtual engine torque after the switching can be quantified with respect to the vehicle speed. Therefore, it is also possible to reduce the likelihood of the virtual engine torque being too small and the virtual engine speed from being too high.

The three drive modes may be selectable by a driver. For example, the drive mode may be settable by the driver via the HMI 20 before the battery electric vehicle 100 starts traveling. Alternatively, the three drive modes may be automatically selected by the control device 101. For example, the control device 101 may acquire a state of a road surface on which the battery electric vehicle 100 travels by a camera, and may automatically select the snow mode when determination is made that the battery electric vehicle 100 travels on a road surface with less friction.

### 9. Third Embodiment

A third embodiment will be described. The third embodiment can be combined with the first embodiment or the second embodiment. In the third embodiment, in a case where the vehicle speed of the battery electric vehicle 100 is zero in the MT mode, that is, while the battery electric vehicle 100 is stopped, neutral is selected as the gear position. By selecting the neutral, it is possible to prevent the virtual engine from stalling during the stop. In addition, also in a case where the switching from the EV mode to the MT mode is performed while the battery electric vehicle 100 is stopped, the neutral is selected as the gear position.

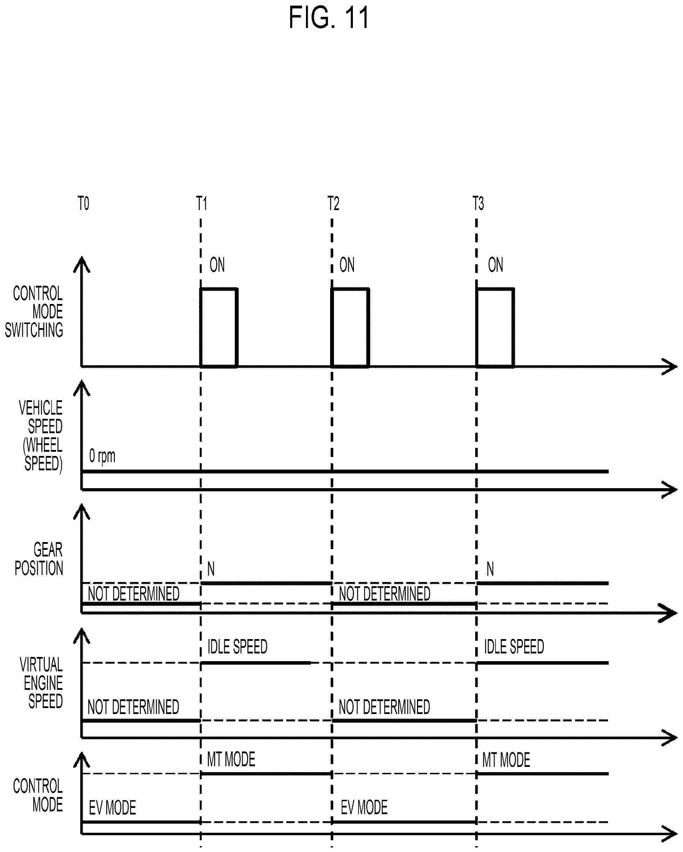

FIG. 11 is a time chart showing a state of selection of the gear position in the third embodiment. At time T0, the EV mode is selected. At time T1, the driver operates the HMI 20 or presses the control mode switching switch to select the MT mode. At this time, the battery electric vehicle 100 is stopped, that is, the vehicle speed is zero. Therefore, the control device 101 selects the neutral as the gear position when the control mode is switched to the MT mode at time T1.

The virtual engine speed is not calculated in the EV mode. Therefore, while the control mode is in the EV mode, that is, until time T1, the virtual engine speed is not displayed on the HMI 20. That is, the display of the HMI 20 is disabled. Then, when the control mode is switched to the MT mode at time T1, the virtual engine speed is displayed on the HMI 20. The virtual engine speed at this time is set to an idle speed. The idle speed is predetermined, for example, according to the engine characteristics to be simulated.

Thereafter, at time T2, the driver selects the EV mode, and the control mode is switched to the EV mode. Then, at time T3, the driver selects the MT mode again, and the control mode is switched to the MT mode. Also at this time, the vehicle speed is zero as in time T1, and thus the neutral gear position is selected. The virtual engine speed displayed on the HMI 20 is set to the idle speed.

### 10. Processing Example

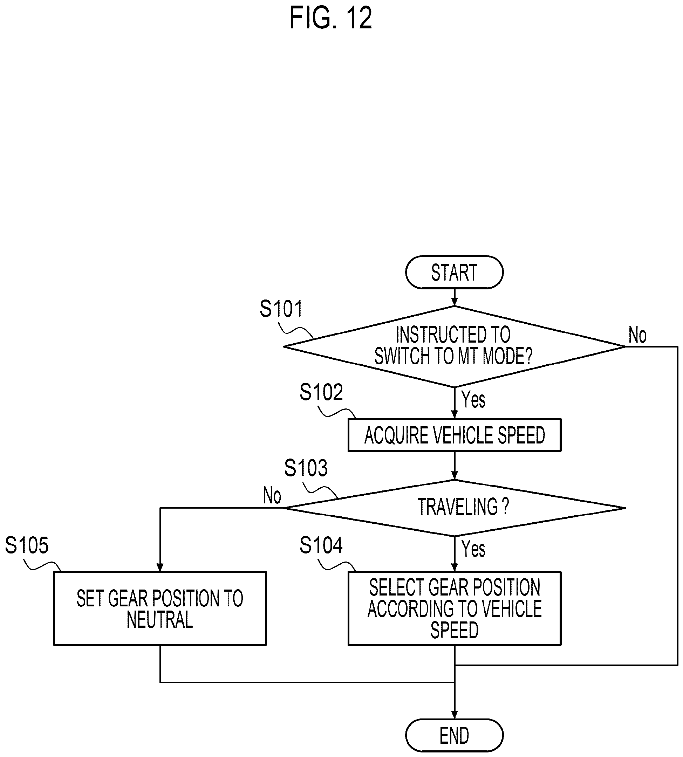

FIG. 12 is a flowchart showing an example of processing by the control device 101. A series of processing shown in the flowchart is realized by the processor 102 executing the program 104. The series of processing are repeatedly executed at a predetermined control cycle, for example, during activation of the battery electric vehicle 100. Here, a processing example in an embodiment in which the first embodiment or the second embodiment is combined with the third embodiment is shown.

In step S101, the processor 102 determines whether or not the driver has instructed to switch to the MT mode. The processor 102 determines that the switching is instructed, for example, when the driver operates the screen displayed on the touch panel display of the HMI 20 to select the switching of the control mode. Alternatively, the determination may be made that the switching is instructed when the driver presses the mode switching switch. When the switching to the MT mode is instructed (step S101; Yes), the processing proceeds to step S102. When the switching to the MT mode is not instructed (step S101; No), the current processing is ended.

In step S102, the processor 102 acquires the vehicle speed of the battery electric vehicle 100. The vehicle speed is acquired from the vehicle speed sensor 11. When the vehicle speed is acquired, the processing proceeds to step S103.

In step S103, the processor 102 determines whether or not the battery electric vehicle 100 is traveling. Whether or not the battery electric vehicle 100 is traveling can be determined from the vehicle speed. That is, the determination is made that the battery electric vehicle 100 is not traveling when the vehicle speed is zero, and the determination is made that the battery electric vehicle 100 is traveling when the vehicle speed is greater than zero. Alternatively, the processor 102 may determine that the battery electric vehicle 100 is not traveling when the vehicle speed is lower than a predetermined threshold value, and may determine that the battery electric vehicle 100 is traveling when the vehicle speed is equal to or higher than the threshold value. In a case where the battery electric vehicle 100 is traveling (step S103; Yes), the processing proceeds to step S104. In a case where the battery electric vehicle 100 is not traveling (step S103; No), the processing proceeds to step S105.

In step S104, the processor 102 automatically selects the virtual gear position according to the vehicle speed. A method of selecting the virtual gear position according to the vehicle speed is as described in the first embodiment and the second embodiment, and the virtual gear position is selected in accordance with any one of the embodiments. When the virtual gear position is selected, the series of processing is ended.

In step S105, the processor 102 sets the gear position to the neutral. When the gear position is set to the neutral, the series of processing is ended.

## Claims

1. A battery electric vehicle (100) that includes an electric motor (4F, 4R) as a drive source, the battery electric vehicle (100) comprising:
a processor (102) configured to control the electric motor (4F, 4R);
a first controller (22) configured to give a continuous instruction to the processor (102) in accordance with an operation amount of the first controller (22); and
a second controller (24) configured to give a discrete instruction to the processor (102) for each operation of the second controller (24),
wherein the processor (102) is configured to execute
determining torque of the electric motor (4F, 4R) in accordance with the operation amount of the first controller (22) in a case where the electric motor (4F, 4R) is controlled in a first mode, the first mode being a mode in which the operation of the second controller (24) is disabled,
switching a relationship between the operation amount of the first controller (22) and the torque of the electric motor (4F, 4R) from among a plurality of predetermined relationships in accordance with the operation of the second controller (24) in a case where the electric motor (4F, 4R) is controlled in a second mode, the second mode being a mode in which the operation of the second controller (24) is enabled, and
selecting the relationship between the operation amount of the first controller (22) and the torque of the electric motor (4F, 4R) from among the predetermined relationships in accordance with a vehicle speed of the battery electric vehicle (100) in a case where the first mode is switched to the second mode.

2. The battery electric vehicle (100) according to claim 1, wherein the processor (102) is configured to further execute selecting, from among the predetermined relationships, a relationship in which the torque of the electric motor (4F, 4R) with respect to the operation amount of the first controller (22) under a current vehicle speed is maximized, in a case where the first mode is switched to the second mode.

3. The battery electric vehicle (100) according to claim 1 or 2, further comprising a display unit (20) configured to display a virtual rotation speed, wherein:
each of the predetermined relationships includes a relationship between the operation amount of the first controller (22) and the virtual rotation speed; and
the processor (102) is configured to further execute
disabling a display of the display unit (20) in a case where the electric motor (4F, 4R) is controlled in the first mode,
changing the virtual rotation speed displayed on the display unit (20) in accordance with the operation amount of the first controller (22) in compliance with the relationship selected from among the predetermined relationships in a case where the electric motor (4F, 4R) is controlled in the second mode, and
displaying a predetermined rotation speed on the display unit (20) in a case where the first mode is switched to the second mode while the battery electric vehicle (100) is stopped.

4. The battery electric vehicle (100) according to any one of claims 1 to 3, wherein:
the second mode includes a plurality of modes; and
the relationship that the processor (102) selects from among the predetermined relationships in a case where the first mode is switched to the second mode is different in each of the plurality of the modes.

5. The battery electric vehicle (100) according to claim 4, further comprising a display unit (20) configured to display a virtual rotation speed, wherein:
each of the predetermined relationships includes a relationship between the operation amount of the first controller (22) and the virtual rotation speed; and
the processor (102) is configured to further execute
disabling a display of the display unit (20) in a case where the electric motor (4F, 4R) is controlled in the first mode,
changing the virtual rotation speed displayed on the display unit (20) in accordance with the operation amount of the first controller (22) in compliance with the relationship selected from among the predetermined relationships in a case where the electric motor (4F, 4R) is controlled in the second mode, and
displaying a predetermined rotation speed on the display unit (20) in a case where the first mode is switched to the second mode while the battery electric vehicle (100) is stopped.

6. The battery electric vehicle (100) according to any one of claims 1 to 5, wherein:
each of the predetermined relationships between the operation amount of the first controller (22) and the torque of the electric motor (4F, 4R) corresponds to each of a plurality of virtual gear positions; and
the second controller (24) is a controller configured to relatively specify the virtual gear position.

7. The battery electric vehicle (100) according to claim 6, wherein the second controller (24) is a pseudo paddle shifter configured to simulate a paddle shifter (24) of a transmission vehicle.

8. The battery electric vehicle (100) according to claim 6, wherein the second controller (24) is a pseudo shift lever (24) configured to simulate a shift lever of a transmission vehicle.

9. The battery electric vehicle (100) according to any one of claims 1 to 5, wherein the relationship between the operation amount of the first controller (22) and the torque of the electric motor (4F, 4R) in the second mode is predetermined such that the torque of the electric motor (4F, 4R) is smaller than the torque of the electric motor (4F, 4R) with respect to the operation amount of the first controller (22) in the first mode.

10. The battery electric vehicle (100) according to any one of claims 1 to 5, wherein:
the first controller (22) is an accelerator pedal (22); and
the predetermined relationships are predetermined such that a relationship between an operation amount of the accelerator pedal (22) in each of a plurality of gear ratios of a transmission vehicle and engine torque is reproduced.
